# EUROPÄISCHE PATENTANMELDUNG

(11) **EP 4 224 132 A1**
(43) Veröffentlichungstag der Anmeldung: **09.08.2023**
(21) Anmeldenummer: 23152928.0
(22) Anmeldetag: 23.01.2023
(51) Int. Cl.: G01L 19/00, G01L 19/06, G01L 19/14

(54) **DRUCKSENSOR**

(30) Priorität: 02.02.2022 DE 102022102445
(71) Anmelder: Krohne Pressure Solutions GmbH, 32423 Minden (DE)
(72) Erfinder: Barton, Klaus-Dieter, 32425 Minden (DE)
(74) Vertreter: Gesthuysen Patentanwälte

(57) **Zusammenfassung**

Beschrieben und dargestellt ist ein Drucksensor (1) zur Bestimmung des Drucks eines fluiden Mediums (7) in einem durch eine Wandung (6) begrenzten Volumen, umfassend wenigstens ein Sensorelement (2), ein Sensorgehäuse (11), wenigstens einen ersten Druckausgleichskanal (4) und eine Schutzkappe (5), wobei das Sensorelement (2) in dem Sensorgehäuse (11) angeordnet ist, wobei die Schutzkappe (5) mediumseitig mit dem Sensorgehäuse (11) verbunden ist, wobei das Sensorelement (2) über den wenigstens einen ersten Druckausgleichskanal (4) im Betrieb mit dem Medium (7) verbunden ist. Die Aufgabe, einen Drucksensor anzugeben, der besonders einfach ausgebildet ist und weiterhin das Sensorelement schädigende Druckimpulse mindert, ist dadurch gelöst, dass der wenigstens eine erste Druckausgleichskanal (4) zumindest teilweise als Ausnehmung in die Schutzkappe (5) eingebracht ist, und dass der wenigstens eine erste Druckausgleichskanal (4) geometrisch derart ausgestaltet ist, dass zur Entlastung des Sensorelementes (2) Druckspitzen durch Umlenkung und/oder durch erhöhte Wandreibung des Mediums (7) abgeschwächt werden.

## Beschreibung

Die Erfindung geht aus von einem Drucksensor zur Bestimmung des Drucks eines fluiden Mediums in einem durch eine Wandung begrenzten Volumen, umfassend wenigstens ein Sensorelement, ein Sensorgehäuse, wenigstens einen ersten Druckausgleichskanal und eine Schutzkappe, wobei das Sensorelement in dem Sensorgehäuse angeordnet ist, wobei die Schutzkappe mediumseitig mit dem Sensorgehäuse verbunden ist und wobei das Sensorelement über den wenigstens einen ersten Druckausgleichskanal im Betrieb mit dem Medium verbunden ist.

In hydraulischen Anlagen kann unter bestimmten Betriebsbedingungen Kavitation auftreten. Kavitation entsteht, wenn der Druck in hydrodynamischen Strömungen geringer ist als der Dampfdruck des Mediums. Es kommt zur Bildung von Gasblasen, die schlagartig implodieren und dabei in der näheren Umgebung Druckspitzen verursachen. Diese können zu Erosion an den anliegenden Bauteilen führen und auch die den Druckspitzen ausgesetzten Drucksensoren beschädigen.

Die meisten statischen Drucksensoren arbeiten mit druckempfindlichen Membranen, die nur eine begrenzte Überlastungsfestigkeit besitzen. Wenn diese Membranen direkt permanenten Druckspitzen mit hohen Frequenzen oder einzelnen Druckstößen ausgesetzt werden, kann es zu dauerhaften Beschädigungen oder sogar zur Zerstörung der Membran kommen.

Aus dem Stand der Technik der DE 10 2010 001 963 A1 ist ein Drucksensor bekannt, der in Bezug auf das zu vermessende Medium zurückliegend angeordnet ist, wobei das zu vermessende Medium über einen langen Druckkanal zum Sensorelement geführt wird und wobei in dem Druckkanal ein zusätzlicher Dämpfungseinsatz angeordnet ist, der durch einen Dämpfungskanal an dessen Mantelfläche Druckimpulse dämpft, die das Sensorelement schädigen können.

Ausgehend von dem dargelegten Stand der Technik ist es Aufgabe der vorliegenden Erfindung, einen Drucksensor anzugeben, der besonders einfach ausgebildet ist und weiterhin das Sensorelement schädigende Druckimpulse mindert.

Gemäß einer ersten Lehre der vorliegenden Erfindung wird die zuvor dargelegte Aufgabe durch einen eingangs beschriebenen Drucksensor dadurch gelöst, dass der wenigstens eine erste Druckausgleichskanal zumindest teilweise als Ausnehmung in die Schutzkappe eingebracht ist, und
dass der wenigstens eine erste Druckausgleichskanal geometrisch derart ausgestaltet ist, dass zur Entlastung des Sensorelementes Druckspitzen durch Umlenkung und/oder durch erhöhte Wandreibung des Mediums abschwächt werden.

Erfindungsgemäß wurde erkannt, dass bei einem frontliegenden Sensorelement, d.h. wobei das Sensorelement mediumnah angeordnet ist, ein Druckausgleichskanal in der Schutzkappe realisiert sein kann, wobei der Druckausgleichskanal derart ausgebildet und angeordnet ist, dass im Medium auftretende Druckspitzen verringert werden, sodass eine Schädigung des Sensorelements vermieden oder zumindest verringert werden kann.

Im Unterschied zu der aus dem Stand der Technik bekannten Anordnung eines zusätzlichen Dämpfungselementes im Druckkanal hat die erfindungsgemäße Ausgestaltung den Vorteil, dass der Drucksensor insgesamt besonders leicht zu fertigen ist, da das Mittel zur Verringerung von Druckspitzen in den Drucksensor integriert werden kann, ohne ein gesondertes Element dafür vorzusehen.

Das Sensorelement kann beispielsweise als Messmembran ausgebildet sein. Vorzugsweise wird die Auslenkung der Messmembran mittels eines Dehnungsmessstreifens, der auf der Messmembran angeordnet und mit einer Auswerteelektronik verbunden ist, erfasst.

Die Schutzkappe ist vorzugsweise aus Metall, insbesondere aus Kupfer, oder aus Keramik, ausgebildet. Beispielsweise ist die Schutzkappe mit dem Sensorgehäuse verschweißt. Ebenfalls denkbar ist, dass die Schutzkappe mittels einer alternativen kraft- und/oder stoffschlüssigen Verbindung mit dem Sensorgehäuse verbunden ist.

Das zu messende Medium kann als flüssiges Medium oder als gasförmiges Medium ausgebildet sein. Gemäß einer Ausgestaltung ist der Drucksensor derart ausgebildet und in der Wandung angeordnet, dass ein beispielsweise durch eine Rohrleitung strömendes Medium durch den Drucksensor strömen kann, sodass der Druck des flüssigen Mediums erfasst werden kann. Zudem kann auch gasförmiges Medium, insbesondere die Gasphase eines durch eine Rohrleitung strömenden flüssigen Mediums, in den Drucksensor eindringen, sodass die Gasphase eines flüssigen Mediums vermessen werden kann.

Gemäß einer bevorzugten Ausgestaltung ist der erste Druckausgleichskanal mit einer Druckkammer verbunden, wobei die Druckkammer ein größeres Volumen als der erste Druckausgleichskanal aufweist und wobei das Sensorelement im Betrieb den Druck in der Druckkammer misst. Durch das größere Volumen der Druckkammer wird die Dämpfung von Druckspitzen gemäß dieser Ausgestaltung weiter verbessert.

Gemäß einer nächsten vorteilhaften Ausgestaltung weist der erste Druckausgleichskanal eine Querschnittsfläche auf, wobei sich die Form und/oder die Größe der Querschnittsfläche im Verlauf des Druckausgleichskanals ändert, insbesondere wobei sich die Querschnittsfläche im Verlauf des Druckausgleichskanals in Richtung des Sensorelementes vergrößert.

Beispielsweise kann die Querschnittsfläche rund oder oval oder polygonal ausgebildet sein.

Besonders bevorzugt ist die Querschnittsfläche zumindest in dem Bereich, in dem das Medium in den Druckausgleichskanal eintritt, klein ausgebildet. Hierdurch kann ebenfalls gewährleistet werden, dass Druckspitzen abgeschwächt werden, bevor Sie das Sensorelement erreichen.

Gemäß einer weiteren bevorzugten Ausgestaltung teilt sich der erste Druckausgleichskanal in Richtung des Sensorelementes in wenigstens einen zweiten Druckausgleichskanal und einen dritten Druckausgleichskanal. Hierdurch kann eine weitere Reduzierung von Druckspitzen erreicht werden.

Besonders bevorzugt teilt sich der zweite Druckausgleichskanal in Richtung des Sensorelementes in zumindest einen vierten Druckausgleichskanal und einen fünften Druckausgleichskanal und/oder der dritte Druckausgleichskanal teilt sich in Richtung des Sensorelementes in zumindest einen sechsten und einen siebten Druckausgleichskanal. Die weitere Teilung der Druckausgleichskanäle bewirkt eine Entspannung einer Druckwelle und vermindert damit weiterhin die Übertragung von Druckspitzen in Richtung des Sensorelementes.

Gemäß einer weiteren Ausgestaltung weist der erste Druckausgleichskanal eine Mehrzahl von Abschnitten auf, wobei vorzugsweise zwischen den einzelnen Abschnitten wenigstens ein Umlenkelement zur Umlenkung des Mediums angeordnet ist. Ein solches Umlenkelement kann beispielsweise als Richtungsänderung, insbesondere als Knick oder als Biegung, im Druckausgleichskanal und/oder als Strömungsteiler und/oder als separates Element, das in dem Druckausgleichskanal angeordnet ist, ausgebildet sein. Diese Ausgestaltung weist den Vorteil auf, dass durch die Umlenkung des Mediums und der damit verbundenen erhöhten Reibung an der Wand des Druckausgleichskanals Druckspitzen weiter reduziert werden können.

Gemäß einer nächsten Ausgestaltung des Drucksensors ist eine Mehrzahl von eigenständigen Druckausgleichskanälen vorhanden. Beispielsweise weisen die einzelnen Druckausgleichskanäle eine unterschiedliche Querschnittsfläche auf. Vorteilhaft ist es aber ebenfalls, wenn die verschiedenen Druckkanäle eine im Wesentlichen gleiche Form und/oder Größe der Querschnittsfläche aufweisen.

Besonders bevorzugt weist der Drucksensor eine Mehrzahl von eigenständigen Druckausgleichskanälen mit kleiner Querschnittsfläche auf.

Vorzugsweise ist wenigstens ein Druckausgleichskanal zumindest teilweise senkrecht zur Oberfläche des Mediums ausgerichtet. Gemäß dieser Ausgestaltung wird besonders bevorzugt die Gasphase eines flüssigen Mediums vermessen.

Gemäß einer nächsten Ausgestaltung ist der Druckausgleichskanal zumindest teilweise parallel zur Oberfläche und/oder zur Strömungsrichtung eines strömenden Mediums ausgerichtet. Gemäß dieser Ausgestaltung kann ein strömendes Medium den Drucksensor besonders einfach durchlaufen, sodass auch der Druck eines flüssigen strömenden Mediums besonders einfach bestimmt werden kann.

Gemäß einer nächsten Ausgestaltung ist der Druckausgleichskanal in einem Winkel zwischen 0 und 90° zu dem vorzugsweise strömenden Medium angeordnet.

Der Druckausgleichskanal ist gemäß einer Ausgestaltung zumindest teilweise als Bohrung in die Schutzkappe eingebracht.

Vorteilhaft ist es ebenfalls, wenn in der Verbindungslinie zwischen der Öffnung des ersten Druckausgleichskanals oder der Druckausgleichskanäle in die Druckkammer und zum Sensorelement wenigstens ein Wellenbrecher angeordnet ist. Beispielsweise kann der wenigstens eine Wellenbrecher als kragenförmiges Formteil den im Weiteren noch beschriebenen Spalt zwischen einer ringförmigen Ausnehmung der Schutzkappe und des Sensorgehäuses begrenzen. Besonders bevorzugt ist der Wellenbrecher einstückig mit der Schutzkappe ausgebildet.

Gemäß einer weiteren Ausgestaltung weist der erste Druckausgleichskanal im Verlauf wenigstens eine Richtungsänderung auf. Vorzugsweise weist die Richtungsänderung einen Winkel größer als 0° und weniger als 180°, besonders bevorzugt einen Winkel zwischen 45° und 90°, auf. Auch diese Ausgestaltung weist den Vorteil auf, dass durch den Kontakt des Mediums mit der Wandung Druckspitzen weiter abgeschwächt werden.

Besonders bevorzugt ist ein Abschnitt des ersten Druckausgleichskanals als ringförmige Ausnehmung in der Schutzkappe ausgebildet, wobei die ringförmige Ausnehmung vorzugsweise im Wesentlichen parallel zu einem als Messmembran ausgebildeten Sensorelements ausgerichtet ist. Auch diese Ausgestaltung verbessert die Verringerung von Druckspitzen des Mediums zum Schutz des Sensorelementes.

Ist das zu vermessende Medium ein strömendes Medium, so die ringförmige Ausnehmung vorzugsweise im Wesentlichen parallel zur Strömungsrichtung ausgerichtet.

Gemäß einer weiteren bevorzugten Ausgestaltung bildet die ringförmige Ausnehmung in der Schutzkappe einen ringförmigen Spalt zwischen der Schutzkappe und dem Sensorgehäuse.

Besonders bevorzugt ist die ringförmige Ausnehmung derart ausgebildet und zu dem Sensorgehäuse orientiert, dass das Medium über eine Mehrzahl von Einlässen in die Druckkammer gelangt. Die Mehrzahl von Einlässen wir dabei vorzugsweise durch Unterbrechungen eines kragenförmigen Wellenbrechers realisiert.

Gemäß einer weiter bevorzugten Ausgestaltung ist wenigstens ein weiteres Sensorelement zur Messung der Mediumtemperatur vorhanden. Vorzugsweise ist dieses weitere Sensorelement auf dem als Messmembran ausgebildeten ersten Sensorelement angeordnet.

Ein solches thermisches Sensorelement kann in dem erfindungsgemäßen Drucksensor angeordnet werden, da der Drucksensor mediumnah angeordnet ist, sodass eine Temperaturmessung innerhalb des Drucksensors möglich ist.

Gemäß einer weiteren besonders vorteilhaften Ausgestaltung ist wenigstens ein Montagemittel, insbesondere ein Gewinde, zur Befestigung des Drucksensors in einer Wandung vorhanden. In vorteilhafter Weise kann der Drucksensor also einfach in die das Medium begrenzende Wandung, beispielsweise in eine Behälterwandung oder in eine Rohrwandung eingeschraubt werden.

Alternativ kann das Montagemittel auch als Kragen des Sensorgehäuses ausgebildet sein, wobei der Kragen ein Außengewinde aufweist und wobei das Sensorgehäuse zur Montage an der Wandung mit einer Überwurfmutter fixiert wird.

Zudem kann das Montagemittel auch als Kragen des Sensorgehäuses ausgebildet sein, der mit Hilfe einer Flanschplatte an der Wandung des Volumens befestigt wird.

Insbesondere die beiden zuletzt genannten Alternativen weisen den Vorteil auf, dass der Drucksensor zur Ausrichtung des Drucksausgleichskanals oder der Druckausgleichskanäle unterschiedlich orientiert werden kann.

Besonders bevorzugt ist die Schutzkappe flach ausgebildet, sodass das Sensorelement im Betrieb mediumnah angeordnet ist. Eine flache Ausgestaltung meint, dass die Höhe der Schutzkappe, die im Betrieb senkrecht zu einer Strömungsrichtung eines strömenden Mediums orientiert ist, kleiner ist als die Länge der Schutzkappe, die im Betrieb in bzw. entgegen einer Strömungsrichtung eines strömenden Mediums orientiert ist.

Es gibt nun eine Vielzahl von Möglichkeiten, den erfindungsgemäßen Drucksensor auszugestalten und weiterzubilden. Hierzu wird verwiesen auf die dem unabhängigen Patentanspruch 1 nachgeordneten Patentansprüche sowie auf die nachfolgenden Ausführungsbeispiele zusammen mit der Zeichnung.

In der Zeichnung zeigen:
- Fig. 1: ein erstes Ausführungsbeispiel eines Drucksensors im Querschnitt,
- Fig. 2: ein weiteres Ausführungsbeispiel des Drucksensors im Querschnitt,
- Fig. 3: ein weiteres Ausführungsbeispiel eines Drucksensors in Draufsicht von oben,
- Fig. 4: ein weiteres Ausführungsbeispiel eines Drucksensors im Querschnitt.

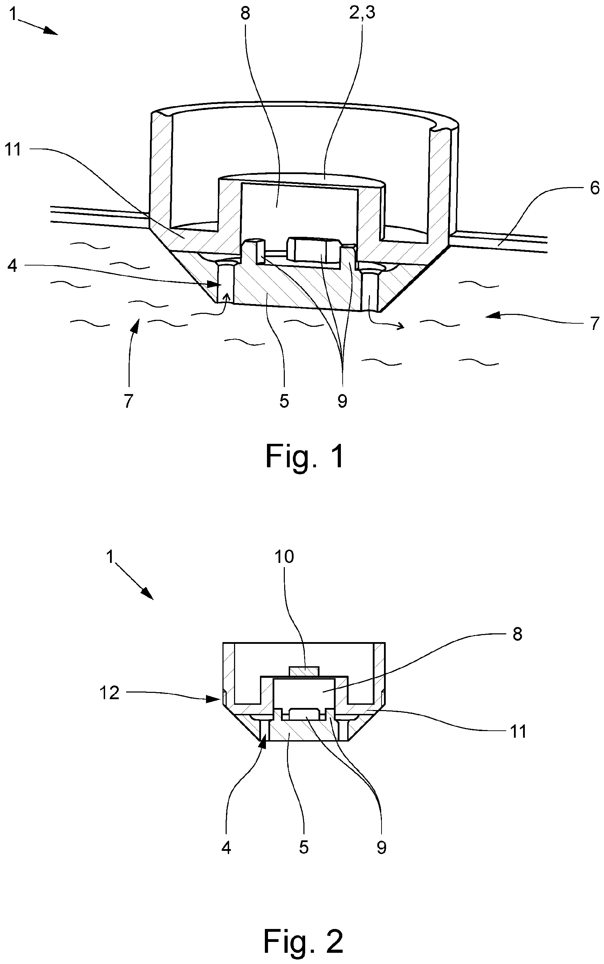

Fig. 1 zeigt ein erstes Ausführungsbeispiel eines Drucksensors 1 zur Bestimmung des Drucks eines fluiden Mediums 7 in einem durch eine Wandung 6 begrenzten Volumens.

Der Drucksensor 1 umfasst ein Sensorelement 2, das im dargestellten Ausführungsbeispiel als Messmembran 3 ausgebildet ist. Die Messmembran 3 ist in einem Sensorgehäuse 11 angeordnet.

Zudem weist der Drucksensor 1 einen Druckausgleichskanal 4 und eine Schutzkappe 5 auf, wobei der Druckausgleichskanal 4 als Ausnehmung in die Schutzkappe 5 eingebracht ist. Die Schutzkappe 5 ist mediumseitig an dem Sensorgehäuse 11 angeordnet.

Das Sensorelement 2 ist im dargestellten Ausführungsbeispiels über den Druckausgleichskanal 4 mit dem Medium 7 verbunden. Zum Schutz der Messmembran 3 ist der Drucksensor 1 mediumseitig durch die Schutzkappe 5 verschlossen. Vor der Messmembran 3 ist eine Druckkammer 8 angeordnet, dessen Druck die Messmembran 3 erfasst. Die weitere Auswerteelektronik zusammen mit dem Dehnungsmessstreifen zur Erfassung der Auslenkung der Messmembran 3 sind nicht dargestellt.

Im Detail dringt das Medium im Betrieb durch den Ausgleichskanal 4 in die Druckkammer 8 ein.

Der Druckausgleichskanal 4 ist geometrisch derart ausgestaltet, dass zur Entlastung der Messmembran 3 Druckspitzen durch Umlenkung und/oder durch erhöhte Wandreibung des Mediums abgeschwächt werden. Im dargestellten Ausführungsbeispiel weist der Ausgleichskanal 4 dazu mehrere Abschnitte auf. Der erste Abschnitt ist als Bohrung in die Schutzkappe 5 ausgebildet. Durch die Bohrung wird das Medium 7 durch die Schutzkappe 5 in einen zweiten Abschnitt geleitet. Der zweite Abschnitt ist als ringförmige Ausnehmung in der Schutzkappe 5 ausgebildet. Die ringförmige Ausnehmung ist parallel zur Messmembran 3 orientiert. Zudem bildet die ringförmige Ausnehmung zusammen mit dem Sensorgehäuse 11 einen ringförmigen Spalt aus. Zwischen der ringförmigen Ausnehmung und der Druckkammer 8 sind kragenförmige Wellenbrecher 9, die Unterbrechungen aufweisen, angeordnet.

Im Betrieb strömt das Medium 7 durch die Zwischenräume zwischen den Wellenbrechern 9 in die Druckkammer 8. Ist das Medium 7 ein strömendes Medium 7, so kann es anschließend über einen weiteren Druckausgleichskanal 4, der ausgehend von dem ersten Druckausgleichskanal 4 stromabwärts angeordnet ist, in den Behälter oder das Rohr zurückströmen.

Das dargestellte Ausführungsbeispiel eines Drucksensors 1 weist den Vorteil auf, dass eine Schädigung der Membran 3 durch im Medium 7 vorhandene Druckspitzen vermieden oder zumindest verringert werden kann und gleichzeitig der Drucksensor 1 mediumnah angeordnet werden kann. Dies hat den weiteren Vorteil, dass weitere Eigenschaften des Mediums 7, beispielsweise die Temperatur des Mediums 7, ebenfalls erfasst werden können.

Fig. 2 zeigt ein weiteres Ausführungsbeispiel eines Drucksensors 1 im Querschnitt. Neben den bereits zu Fig. 1 beschriebenen Elementen weist der Drucksensor 1 ein weiteres Sensorelement 10 zur Messung der Mediumtemperatur auf. Der dargestellte Drucksensor 1 weist damit den Vorteil auf, dass nicht nur der Druck des Mediums 7 sondern ebenso die Temperatur des Mediums erfasst werden kann.

Zudem weist der Drucksensor ein Gewinde 12 auf, wobei der Drucksensor 1 zur Montage auf besonders einfache Weise in eine Wandung 6 eines Volumens eingeschraubt werden kann.

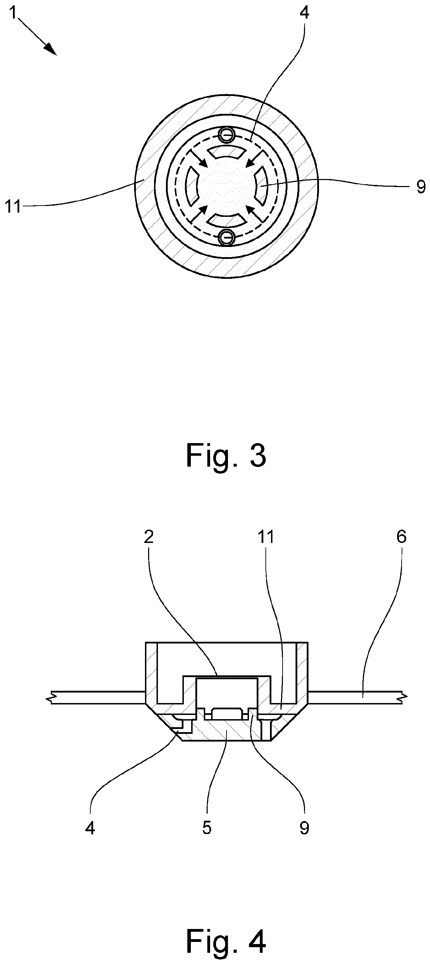

Fig. 3 zeigt ein weiteres Ausführungsbeispiel eines Drucksensors 1 in Draufsicht. Dargestellt ist im Detail die ringförmige Ausnehmung in der Schutzkappe 5 sowie die Anbindung an die Druckkammer 8 durch die Unterbrechungen der Wellenbrecher 9. Durch die Verzweigungen des Druckausgleichkanals 4 sowie durch die stete Vergrößerung des Volumens kann eine Druckwelle im Verlauf des Druckausgleichskanals 4 in Richtung des Sensorelementes 2 entspannt werden, wodurch eine Schädigung der Messmembran 3 vermieden oder zumindest verringert werden kann.

In Fig. 4 ist weiteres Ausführungsbeispiel eines Drucksensors 1 dargestellt. Im Unterschied zu den vorher dargestellten Ausführungsbeispielen ist die Bohrung des Druckausgleichskanals 4 in die Schutzkappe 5 zumindest teilweise parallel zur Strömungsrichtung eines Mediums 7 ausgebildet. Insbesondere ein flüssiges Medium 7 kann auf diese Weise besonders einfach durch die Schutzkappe 5 in die Druckkammer 8 eindringen.

### Bezugszeichen

- 1: Drucksensor
- 2: Sensorelement
- 3: Messmembran
- 4: Druckausgleichskanal
- 5: Schutzkappe
- 6: Wandung
- 7: Medium
- 8: Druckkammer
- 9: Wellenbrecher
- 10: Sensorelement
- 11: Sensorgehäuse
- 12: Gewinde

## Patentansprüche

1. Drucksensor (1) zur Bestimmung des Drucks eines fluiden Mediums (7) in einem durch eine Wandung (6) begrenzten Volumen, umfassend wenigstens ein Sensorelement (2), ein Sensorgehäuse (11), wenigstens einen ersten Druckausgleichskanal (4) und eine Schutzkappe (5),
wobei das Sensorelement (2) in dem Sensorgehäuse (11) angeordnet ist,
wobei die Schutzkappe (5) mediumseitig mit dem Sensorgehäuse (11) verbunden ist,
wobei das Sensorelement (2) über den wenigstens einen ersten Druckausgleichskanal (4) im Betrieb mit dem Medium (7) verbunden ist,
**dadurch gekennzeichnet,**
**dass** der wenigstens eine erste Druckausgleichskanal (4) zumindest teilweise als Ausnehmung in die Schutzkappe (5) eingebracht ist, und
**dass** der wenigstens eine erste Druckausgleichskanal (4) geometrisch derart ausgestaltet ist, dass zur Entlastung des Sensorelementes (2) Druckspitzen durch Umlenkung und/oder durch erhöhte Wandreibung des Mediums (7) abgeschwächt werden.

2. Drucksensor (1) nach Anspruch 1, **dadurch gekennzeichnet, dass** der erste Druckausgleichskanal (4) mit einer Druckkammer (8) verbunden ist, wobei die Druckkammer (8) ein größeres Volumen als der erste Druckausgleichskanal (4) aufweist und wobei das Sensorelement (2) im Betrieb den Druck in der Druckkammer (8) misst.

3. Drucksensor (1) nach Anspruch 1 oder 2, **dadurch gekennzeichnet, dass** der erste Druckausgleichskanal (4) eine Querschnittsfläche aufweist, wobei sich die Form und/oder die Größe der Querschnittsfläche im Verlauf des Druckausgleichskanals (4) ändert, insbesondere wobei sich die Querschnittsfläche im Verlauf des Druckausgleichskanals (4) in Richtung des Sensorelementes (2) vergrößert.

4. Drucksensor (1) nach einem der Ansprüche 1 bis 3, **dadurch gekennzeichnet, dass** sich der erste Druckausgleichskanal (4) in Richtung des Sensorelementes (2) in wenigstens einen zweiten Druckausgleichskanal und einen dritten Druckausgleichskanal teilt.

5. Drucksensor (1) nach Anspruch 4, **dadurch gekennzeichnet, dass** sich der zweite Druckausgleichskanal in Richtung des Sensorelementes (2) in zumindest einen vierten Druckausgleichskanal und einen fünften Druckausgleichskanal teilt und/oder dass sich der dritte Druckausgleichskanal in Richtung des Sensorelementes (2) in zumindest einen sechsten und einen siebten Druckausgleichskanal teilt.

6. Drucksensor (1) nach einem der Ansprüche 1 bis 5, **dadurch gekennzeichnet, dass** der erste Druckausgleichskanal (4) eine Mehrzahl von Abschnitten aufweist, wobei vorzugsweise zwischen den einzelnen Abschnitten wenigstens ein Umlenkelement zur Umlenkung des Mediums (7) angeordnet ist.

7. Drucksensor (1) nach einem der Ansprüche 1 bis 6, **dadurch gekennzeichnet, dass** eine Mehrzahl von eigenständigen Druckausgleichskanälen (4) vorhanden ist, die vorzugsweise eine unterschiedliche Querschnittsfläche aufweisen.

8. Drucksensor (1) nach einem der Ansprüche 1 bis 7, **dadurch gekennzeichnet, dass** in der Verbindungslinie zwischen der Öffnung des Druckausgleichskanals (4) oder der Druckausgleichskanäle (4) in die Druckkammer (8) und zum Sensorelement (2) wenigstens ein Wellenbrecher (9) angeordnet und in der Schutzkappe ausgebildet ist.

9. Drucksensor (1) nach einem der Ansprüche 1 bis 8, **dadurch gekennzeichnet, dass** der wenigstens eine Druckausgleichskanal (4) im Verlauf wenigstens eine Richtungsänderung aufweist.

10. Drucksensor (1) nach einem der Ansprüche 1 bis 9, **dadurch gekennzeichnet, dass** ein Abschnitt des ersten Druckausgleichskanals (4) als ringförmige Ausnehmung in der Schutzkappe (5) ausgebildet ist, wobei die ringförmige Ausnehmung vorzugsweise im Wesentlichen parallel zu einem als Messmembran (3) ausgebildeten Sensorelement (2) ausgerichtet ist.

11. Drucksensor (1) nach Anspruch 10, **dadurch gekennzeichnet, dass** die ringförmige Ausnehmung in der Schutzkappe (5) einen ringförmigen Spalt zwischen der Schutzkappe (5) und dem Sensorgehäuse (11) bildet.

12. Drucksensor (1) nach Anspruch 10 oder 11, **dadurch gekennzeichnet, dass** die ringförmige Ausnehmung derart ausgebildet und zu dem Sensorgehäuse orientiert ist, dass das Medium (7) über eine Mehrzahl von Einlässen in die Druckkammer (8) gelangt.

13. Drucksensor (1) nach einem der Ansprüche 1 bis 12, **dadurch gekennzeichnet, dass** wenigstens ein weiteres Sensorelement (10) zur Messung der Mediumtemperatur vorhanden ist.

14. Drucksensor (1) nach einem der Ansprüche 1 bis 13, **dadurch gekennzeichnet, dass** wenigstens ein Montagemittel, insbesondere ein Gewinde (12), zur Befestigung des Drucksensors (1) in einer Wandung (6) des Volumens vorhanden ist.

15. Drucksensor (1) nach einem der Ansprüche 1 bis 14, **dadurch gekennzeichnet, dass** die Schutzkappe (5) flach ausgebildet ist, sodass das Sensorelement (2) im Betrieb mediumnah angeordnet ist.
